# EUROPÄISCHE PATENTSCHRIFT

(11) **EP 2 504 284 B1**
(45) Veröffentlichungstag und Bekanntmachung des Hinweises auf die Patenterteilung: **02.07.2014**
(21) Anmeldenummer: 10784304.7
(22) Anmeldetag: 26.11.2010
(51) Int. Cl.: C02F 1/42

(54) **STEUERUNG EINER VERSCHNEIDEEINRICHTUNG BEI REGENERATION EINES TEILS DER HARZBEHÄLTER EINER WASSERENTHÄRTUNGSVORRICHTUNG**
CONTROLLING A BLENDING UNIT WHILE REGENERATING A PART OF THE RESIN TANKS OF A WATER SOFTENING DEVICE
COMMANDE D'UN DISPOSITIF DE COUPAGE EN CAS DE GÉNÉRATION D'UNE PARTIE DES RÉSERVOIRS DE RÉSINE D'UN DISPOSITIF ADOUCISSEUR D'EAU

(30) Priorität: 27.11.2009 DE 102009047254
(43) Veröffentlichungstag der Anmeldung: 03.10.2012
(73) Patentinhaber: Judo Wasseraufbereitung GmbH, 71364 Winnenden (DE)
(72) Erfinder: MELCHER, Siegfried, 71720 Oberstenfeld (DE)
(74) Vertreter: Kohler Schmid Möbus
(86) Internationale Anmeldenummer: PCT/EP2010/068283
(87) Internationale Veröffentlichungsnummer: WO 2011/064325

(56) Entgegenhaltungen:
- WO-A2-2008/048845
- DE-B3-102007 059 058
- US-A- 5 069 779
- US-A1- 2007 114 178

## Beschreibung

Die Erfindung betrifft ein Verfahren zum Betrieb einer Wasserenthärtungsanlage, wobei die Wasserenthärtungsanlage umfasst
- eine Enthärtungsvorrichtung,
- einen Sensor zur Messung einer Rohwasserhärte oder ein Mittel zur Eingabe einer Rohwasserhärte,
- eine automatisch verstellbare Verschneideeinrichtung zum Mischen eines Verschnittwasserstroms V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
- und eine elektronische Steuereinrichtung zur Steuerung der Verstellposition der Verschneideeinrichtung, so dass die Wasserhärte im
Verschnittwasserstrom V(t)_{verschnitt} auf einen vorgegebenen Sollwert (SW) eingestellt wird,
wobei für die Steuerung der Verstellposition die gemessene oder eingegebene Rohwasserhärte ausgewertet wird und eine in der Steuereinrichtung hinterlegte, für die Wasserenthärtungsanlage spezifische Abhängigkeit der Verhältnisse der Teilströme V(t)_{teil1weich} und V(t)ₜₑᵢₗ₂ᵣₒₕ von der Verstellposition der Verschneideeinrichtung unterstellt wird.

Ein solches Verfahren ist bekannt geworden aus der DE 10 2007 013 203 A1.

Wasserenthärtung wird überall da eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser erwünscht ist.

Bei der Wasserenthärtung werden Enthärtungsvorrichtungen eingesetzt, die meist nach dem Ionenaustauschverfahren arbeiten. Die im Wasser enthaltenen Härtebildner (Calcium- und Magnesium-Ionen) werden dabei in einem Ionentauscherharz gegen Natrium-Ionen ausgetauscht. Bei Erschöpfung des Ionentauscherharzes muss dieses regeneriert werden, etwa durch Spülung mit einer Salzsole.

Aus technischen oder wirtschaftlichen Gründen ist es oft notwendig oder erwünscht, kein vollenthärtetes Wasser, sondern Wasser mit einer mittleren, jedoch eng definierten Wasserhärte zur Verfügung zu haben. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität des Enthärters schnell erschöpft, und es muss frühzeitig regeneriert werden. Dies ist mit einem hohen Salzverbrauch und damit hohen Kosten verbunden. Zur Durchführung einer Teilenthärtung ist eine Vorrichtung (Verschneideeinrichtung) zum Mischen von enthärtetem Wasser (auch als Reinwasser oder Weichwasser bezeichnet) und Rohwasser notwendig. In der Regel ist es erwünscht, die Wasserhärte im Verschnittwasser, das ist das Gemisch von enthärtetem Wasser und Rohwasser, einzustellen und zu steuern.

DE 10 2007 013 203 A1 beschreibt eine Vorrichtung zur Wasseraufbereitung mit einer Verschnittvorrichtung. Die Vorrichtung zur Wasseraufbereitung kann mittels eines Stellelementes abhängig von wenigstens einem Betriebsparameter eine Verschnittkorrektur im Sinne einer Nachjustierung oder Nacheinstellung vornehmen, wodurch dem Verbraucher innerhalb einer gewissen Bandbreite eine im Wesentlichen konstante Wasserqualität zugeführt werden soll. Eine selbsttätige Einstellung des Verschnittwasserverhältnisses wird vorzugsweise anhand des Wasserzustands, etwa des Rohwasserzustands, vorgenommen. Zur Erfassung des Wasserzustandes ist ein Sensorelement vorgesehen. Aus der erfassten Messgröße des Sensors wird ein Soll-Verschnittverhältnis bestimmt, das zur Einstellung des tatsächlichen Verschnittverhältnisses herangezogen wird.

Nachteilig bei der in DE 10 2007 013 203 A1 beschriebenen Vorrichtung zur Wasseraufbereitung ist, dass für den Austausch eines erschöpften Filtermediums bzw. für die Regeneration eines Aufbereitungsmediums eine Betriebsunterbrechung oder ein Härtedurchbruch in Kauf genommen werden muss.

Die DE 10 2007 059 058 B3 beschreibt eine Wasserenthärtungsanlage mit zwei mit Ionenaustauscherharz gefüllten Behältern. Eine solche Anlage kann grundsätzlich mit parallel angeschlossenen Behältern betrieben werden. In der DE 10 2007 059 058 B3 werden in Abhängigkeit von der durchgeflossenen Wassermenge und der Härte des Rohwassers die beiden Behälter nacheinander regeneriert, so dass dem Verbraucher auch während der Regeneration immer weiches Wasser zur Verfügung steht (Pendelbetrieb). Eine Verschneidevorrichtung regelt die Einstellung der Verschnittwasserhärte anhand der Rohwasserhärte und der gemessenen Weichwasser bzw. Rohwasser führenden Teilströme.

Die Verschneidungssteuerung in der DE 10 2007 059 058 B3 kann einen Sollwert der Wasserhärte im Verschnittwasser sowohl im Normalbetrieb als auch im Regenerationsbetrieb sehr genau einhalten, ist jedoch aufgrund der Auswertung der experimentell bestimmten Teilströme und der Rohwasserhärte (also von drei Messparametern) apparativ und steuerungstechnisch sehr aufwändig. Falls die Bestimmung von Teilströmen während einer Regeneration indirekt erfolgt, müssen zusätzlich Spülströme berücksichtigt werden, was die Steuerung weiter verkompliziert.

Der Steuerungsaufwand kann reduziert werden, indem auf eine experimentelle Bestimmung der Verhältnisse der Teilströme und deren Rückkopplung verzichtet wird, und stattdessen anhand einer in einer Steuereinrichtung hinterlegten, anlagenspezifischen Abhängigkeit des Verhältnisses der Teilströme von einer einstellbaren Verstellposition der Verschneidevorrichtung ausgegangen wird.

Wird bei einer Wasserenthärtungsanlage mit mehreren Behältern für lonentauscherharz zwischen einem Parallelbetrieb aller Behälter und einem Regenerationsbetrieb, während dessen nur ein Teil der Behälter an der Enthärtung teilnimmt, umgeschaltet, so ändern sich die Druckverhältnisse in der Wasserenthärtungsanlage, insbesondere an der Zu- und Ableitung. Als Folge davon ändert sich - bei gleicher Verstellposition der Verschneidevorrichtung - das Verhältnis der beiden Teilströme und somit die Verschnittwasserhärte. Bei einer Steuerung der Verschneidevorrichtung nur anhand der bestimmten Rohwasserhärte führt dies zu unerwünschten Abweichungen bzw. Ungenauigkeiten der Verschnittwasserhärte vom Sollwert.

### Aufgabe der Erfindung

Es ist die Aufgabe der vorliegenden Erfindung, bei einer Wasserenthärtungsanlage in allen Betriebssituationen eine gute Einhaltung eines gewünschten Sollwerts einer Wasserhärte in einem Verschnittwasserstrom mit geringem Aufwand zu erreichen.

### Kurze Beschreibung der Erfindung

Diese Aufgabe wird gelöst durch ein Verfahren der eingangs genannten Art, das dadurch gekennzeichnet ist, dass die Enthärtungsvorrichtung mehrere Behälter mit lonentauscherharz umfasst,
und dass die spezifische Abhängigkeit der Verhältnisse der Teilströme V(t)_{teil1weich} und V(t)ₜₑᵢₗ₂ᵣₒₕ von der Verstellposition der Verschneideeinrichtung mit einer in der Steuereinrichtung hinterlegten Korrekturfunktion abgeändert wird, wenn ein Teil der Behälter einer Regeneration unterzogen wird.

Dadurch, dass die Enthärtungsvorrichtung mehrere Behälter mit lonentauscherharz umfasst, kann zunächst während eines Normalbetriebs der Wasserenthärtungsanlage in einem Parallelbetrieb der Behälter eine große Enthärtungskapazität bereitgestellt werden. Die Regeneration der Behälter kann im Rahmen eines Pendelbetriebs nacheinander erfolgen, so dass stets enthärtetes Wasser mit der Wasserenthärtungsanlage bereitgestellt werden kann.

Im Rahmen der Erfindung wird die Verschnittwasserhärte mittels der experimentell bestimmten Rohwasserhärte gesteuert: Wird beispielsweise eine Rohwasserhärte von 12°dH (deutscher Härte) im Rohwasser gemessen, und der Söllwert SW der Verschnittwasserhärte ist mit 8°dH vorgegeben, so stellt die Steuereinrichtung eine Verstellposition der Verschneideeinrichtung ein, in der der die Teilströme V(t)_{teil1weich} und V(t)ₜₑₙ₂ᵣₒₕ ein Verhältnis von 1:2 haben. Die Abhängigkeit von Verstellposition und Verhältnis der Teilströme ist in der Steuereinrichtung abgespeichert. Die Rohwasserhärte kann mittels eines Sensors der Wasserenthärtungsanlage gemessen, insbesondere laufend gemessen werden, oder die Rohwasserhärte wird mit einem geeigneten Eingabemittel (etwa einer Tastatur, einer Stellschraube, einem Wahlhebel oder einem elektronischen Signaleingang) eingegeben. Im Falle einer Eingabe kann die Information über die Rohwasserhärte beispielsweise vom Wasserversorgungsunternehmen mitgeteilt werden, oder separat titrimetrisch bestimmt werden.

Wird nun zwischen dem Normalbetrieb mit Parallelbetrieb der Behälter und dem Regenerationsbetrieb mit Pendelbetrieb der Behälter umgeschaltet, so ändern sich die Druckverhältnisse in der Wasserenthärtungsanlage. Die während des Normalbetriebs geltende, anlagenspezifische Abhängigkeit zwischen der Verstellposition der Verschneideeinrichtung (etwa eines Verschneideventils) und dem Verhältnis des ersten und zweiten Teilstroms V(t)_{teil1weich} und V(t)ₜₑᵢₗ₂ᵣₒₕ ist dann nicht mehr ganz korrekt: Werden ein oder mehrere Behälter für eine Regeneration vom Netz genommen, so verstärkt sich ein Druckverlust im ersten, Weichwasser führenden Teilstrom V(t)_{teil1weich}, und im Verschnittwasser verschieben sich die Anteile zugunsten des Rohwassers. Damit steigt die Wasserhärte im Verschnittwasserstrom V(t)_{verschnitt} an und weicht somit vom vorgegebenen Sollwert (SW) ab.

Erfindungsgemäß wird daher im Regenerationsbetrieb, wenn nur ein Teil der Behälter an der Wasserenthärtung teilnimmt und der übrige Teil der Behälter der Regeneration unterzogen wird, die in der Steuereinrichtung abgespeicherte spezifische Abhängigkeit mit einer ebenfalls in der Steuereinrichtung abgespeicherten Korrekturfunktion abgeändert. Durch die Anwendung der Korrekturfunktion unterstellt die Steuereinrichtung im Regenerationsbetrieb nunmehr wieder einen korrekten Zusammenhang zwischen der Verstellposition und dem Verhältnis der Teilströme, und Abweichungen der Verschnittwasserhärte von Sollwert werden vermieden bzw. minimiert. Im Ergebnis gestattet die Erfindung somit ein Nachregeln der Verstellposition der Verschneideeinrichtung bei einer Änderung der Druckverhältnisse in der Wasserenthärtungsanlage, insbesondere aufgrund der Änderung der Behälter am Netz anlässlich einer Regeneration.

Die Verstellposition der Verschneideeinrichtung wird automatisch von der elektronischen Steuereinrichtung entsprechend der spezifischen Abhängigkeit angesteuert und während einer Regeneration zusätzlich entsprechend der Korrekturfunktion korrigiert. Die spezifische Abhängigkeit und die Korrekturfunktion werden typischerweise vorab (und typischerweise auch nur einmalig) für den Anlagentyp empirisch ermittelt und herstellerseitig in der Steuereinrichtung abgespeichert. Die spezifische Abhängigkeit und die Korrekturfunktion sind abhängig von den Strömungsbedingungen in der Wasserenthärtungsanlage, insbesondere der Geometrie der Behälter (Tanks), der Harzfüllung und dem Steuerkopf.

In der Steuereinrichtung kann die Korrekturfunktion unmittelbar hinterlegt sein, und die Steuereinrichtung wendet dann während einer Regeneration die Korrekturfunktion zusätzlich zur (ungeänderten) spezifischen Abhängigkeit an. Alternativ kann die Korrekturfunktion als eine mittels der Korrekturfunktion abgeänderte, weitere spezifische Abhängigkeit in der Steuereinrichtung hinterlegt sein. Die abgeänderte, weitere spezifische Abhängigkeit wird dann während einer Regeneration anstelle der (ungeänderten) spezifischen Abhängigkeit von der Steuereinrichtung unterstellt.

Das Verhältnis der Teilströme braucht im Rahmen der Erfindung im Betrieb der Wasserenthärtungsanlage nicht experimentell überwacht zu werden, wodurch der apparative und rechnertechnische Aufwand gegenüber einer Rückkopplung der Teilströme in die Steuereinrichtung stark verringert ist. Ebenso kommt die Erfindung ohne eine Rückkopplung einer mittels einer ionenselektiven Elektrode gemessenen Verschnittwasserhärte aus; elektronenselektive Elektroden sind recht störanfällig, und die Rückkopplung würde wiederum die Steuerung apparativ aufwändiger und rechentechnisch schwieriger machen.

### Bevorzugte Varianten der Erfindung

Bei einer besonders bevorzugten Variante des erfindungsgemäßen Verfahrens ist die hinterlegte Korrekturfunktion abhängig von der Anzahl der Behälter mit lonentauscherharz, die gerade einer Regeneration unterzogen werden. Diese Variante wird bevorzugt bei Wasserenthärtungsanlagen mit drei oder mehr Behältern mit lonentauscherharz eingesetzt. Der Druckverlust in der Wasserenthärtungsanlage ist abhängig von der Anzahl der Behälter, welche gerade vom Netz genommen sind. Durch die Berücksichtigung der Anzahl der in Regeneration befindlichen Behälter bleibt die Korrektur der Verschneidung genau, auch wenn die Anzahl der vom Netz genommenen Behälter während des Regenerationsbetriebs variiert.

Bevorzugt ist weiterhin eine Variante, bei der die hinterlegte Korrekturfunktion abhängig ist von der Geometrie oder geometrischen Anordnung der Behälter mit lonentauscherharz, die gerade einer Regeneration unterzogen werden. Auch dadurch kann die Genauigkeit der Korrektur der Verschneidung durch die Korrekturfunktion verbessert werden. Beispielsweise können die verschiedenen Behälter unterschiedlich gebaut sein oder bezüglich des Wassereinlaufs weiter vorne oder weiter hinten angeschlossen sein, wodurch bei der Trennung vom Wassernetz jeweils unterschiedliche Druckverluste in der Wasserenthärtungsanlage bzw. im Weichwasserstrom auftreten können. Diese Variationen kann dann die Korrekturfunktion in dieser Variante ausgleichen.

Besonders bevorzugt ist eine Variante, bei der die hinterlegte Korrekturfunktion abhängig ist vom ersten Teilstrom V(t)_{teil1weich} oder vom der Wasserenthärtungsanlage zufließenden, gesamten Rohwasserstrom V(t)ᵣₒₕ. Der Druckverlust in der Wasserenthärtungsanlage ist einerseits abhängig vom Durchfluss durch die Anlage, andererseits von der Anzahl der parallel durchströmten Behälter (Tanks). Die Korrekturfunktion berücksichtigt in dieser Variante beide Effekte; die Korrektur wird damit besonders genau, so dass die Härte im Verschnittwasser während einer Regeneration unabhängig vom Durchfluss konstant bleibt. Werte für die Korrekturfunktion werden experimentell bei verschiedenen Volumenströmen des ersten Teilstroms V(t)_{teil1weich} bzw. des gesamten Rohwasserstroms V(t)ᵣₒₕ bestimmt und in der elektronischen Steuereinrichtung als Korrekturfunktion hinterlegt.

Vorteilhaft ist weiterhin eine Variante, bei der die Korrekturfunktion abhängig ist von einem in der Wasserenthärtungsanlage bestimmten Druckverlust, insbesondere in einem Weichwasser oder Verschnittwasser führenden Bereich. Der Druckverlust stellt die unmittelbare Ursache für die Änderung der Strömungsverhältnisse in der Wasseraufbereitungsanlage dar. Durch seine Berücksichtigung in der Steuerung bzw. der Korrekturfunktion kann die gewünschte Verschnittwasserhärte besonders genau eingehalten werden, unabhängig von der Ursache des Druckverlusts.

Bevorzugt ist auch eine Variante des erfindungsgemäßen Verfahrens, wobei die Korrekturfunktion abhängig ist vom Sollwert der Wasserhärte. Bei der Nachregelung während der Regeneration wird typischerweise der Rohwasseranteil im Verschnittwasser reduziert. Ist der Rohwasseranteil im Verschnittwasser bereits durch den vorgegebenen Sollwert (SW) gering, so ist nur eine geringe Nachregelung der Verstellposition der Verschneideeinrichtung während einer Regeneration notwendig. Bei größeren Sollwerten (SW) ist die Nachregelung entsprechend größer. Die sollwertabhängige Korrektur ermöglich eine genaue Korrektur der Verschnittwasserhärte über einen weiten Sollwertbereich.

Man beachte, dass die oben vorgeschlagenen Abhängigkeiten der Korrekturfunktion sich jeweils im Rahmen einer Vorwärts-Steuerung der Verstellposition der Verschneideeinrichtung auswirken, und keine Rückkopplung von Messparametern erfordern, wodurch die Steuerung der Verstellposition der Verschneideeinrichtung einfach bleibt. Die Korrekturfunktion kann auch mehrere der oben vorgeschlagenen Abhängigkeiten berücksichtigen, beispielsweise in Gestalt einer Durchfluss- und Sollwert (SW)-abhängigen Korrekturkennlinie.

Besonders bevorzugt ist eine Variante des erfindungsgemäßen Verfahrens, bei der die hinterlegte Korrekturfunktion eine Konstante ist. Falls sich über die Dauer eines Regenerationszyklus die Druckverhältnisse in der Wasserenthärtungsanlage nicht merklich ändern, etwa weil während der Regeneration stets genau die gleiche Anzahl von Behältern vom Netz getrennt ist (etwa stets genau ein Behälter) und die Behälter alle gleichartig ausgebildet sind, so kann mit einer einfachen, festen Korrektur bereits eine gute Genauigkeit der Verschnittwasserhärtesteuerung erreicht werden. Eine typische konstante Korrektur kann beispielsweise ein bestimmter zusätzlicher Verstellwinkel eines Verschneideventils gegenüber der Verstellposition gemäß der spezifischen Abhängigkeit im Normalbetrieb sein. Diese Variante wird bevorzugt eingesetzt, wenn die Enthärtungsvorrichtung genau zwei gleichartige Behälter mit lonentauscherharz aufweist.

In den Rahmen der vorliegenden Erfindung fällt auch eine Wasserenthärtungsanlage, wobei die Wasserenthärtungsanlage umfasst
- eine Enthärtungsvorrichtung,
- einen Sensor zur Messung einer Rohwasserhärte oder ein Mittel zur Eingabe einer Rohwasserhärte,
- eine automatisch verstellbare Verschneideeinrichtung zum Mischen eines Verschnittwasserstroms V(t)_{verschnitt} aus einem ersten, enthärteten Teilstrom V(t)_{teil1wich} und einem zweiten, rohwasserführenden Teilstrom V(t)ₜₑᵢₗ₂ᵣₒₕ,
- und eine elektronische Steuereinrichtung zur Steuerung der Verstellposition der Verschneideeinrichtung, so dass die Wasserhärte im
Verschnittwasserstrom V(t)_{verschnitt} auf einen vorgegebenen Sollwert (SW) eingestellt wird,
wobei die Steuereinrichtung dazu ausgebildet ist, für die Steuerung der Verstellposition die gemessene oder eingegebene Rohwasserhärte auszuwerten und eine in der Steuereinrichtung hinterlegte, für die Wasserenthärtungsanlage spezifische Abhängigkeit der Verhältnisse der Teilströme V(t)_{teil1weich} und V(t)ₜₑᵢₗ₂ᵣₒₕ von der Verstellposition der Verschneideeinrichtung zu unterstellen,
dadurch gekennzeichnet, dass die Enthärtungsvorrichtung mehrere Behälter mit lonentauscherharz umfasst,
und dass die Steuereinrichtung dazu ausgebildet ist, die spezifische Abhängigkeit der Verhältnisse der Teilströme V(t)_{teil1weich} und V(t)ₜₑᵢₗ₂ᵣₒₕ von der Verstellposition der Verschneideeinrichtung mit einer in der Steuereinrichtung hinterlegten Korrekturfunktion abzuändern, wenn ein Teil der Behälter einer Regeneration unterzogen wird. Die Steuereinrichtung weist für die Korrekturfunktion einen geeigneten Speicher auf. Die erfindungsgemäße Wasserenthärtungsanlage ist apparativ einfach aufgebaut und ermöglicht eine recht genaue Einhaltung des Sollwerts der Wasserhärte im Verschnittwasser.

Bei einer bevorzugten Ausführungsform der erfindungsgemäßen Wasserenthärtungsanlage ist wenigstens ein Wasserzähler zur direkten oder indirekten Bestimmung des ersten Teilstroms V(t)_{teil1weich} oder des der Wasserenthärtungsanlage zufließenden, gesamten Rohwasserstroms V(t)ᵣₒₕ vorgesehen. Die Korrekturfunktion kann dann den ersten Teilstrom oder den gesamten Rohwasserstrom berücksichtigen und so die Korrekturgenauigkeit erhöhen.

Ebenfalls bevorzugt ist eine Ausführungsform, bei der ein oder mehrere Drucksensoren vorgesehen sind, insbesondere in einem Weichwasser oder Verschnittwasser führenden Bereich. Die Korrekturfunktion kann dann einen Druckverlust in der Wasserenthärtungsanlage berücksichtigen und so ebenfalls die Korrekturgenauigkeit erhöhen.

Weitere Vorteile der Erfindung ergeben sich aus der Beschreibung und der Zeichnung. Die gezeigten und beschriebenen Ausführungsformen sind nicht als abschließend Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig.1: einen schematischen Aufbau einer erfindungsgemäßen Wasserenthärtungsanlage im Parallelbetrieb;
- Fig.2: die erfindungsgemäße Wasserenthärtungsanlage von Fig. 1 im Regenerationsmodus;
- Fig.3: eine Diagramm-Darstellung der Härte im Verschnittwasser einer Wasserenthärtungsanlage entsprechend Fig. 1 in Abhängigkeit vom durch die Anlage geflossenen Wasservolumen ohne erfindungsgemäße Korrektur der Verschneidung;
- Fig.4: eine Diagramm-Darstellung der Härte im Verschnittwasser gemäß Fig. 3, jedoch mit einer erfindungsgemäßen Korrektur der Verschneidung.

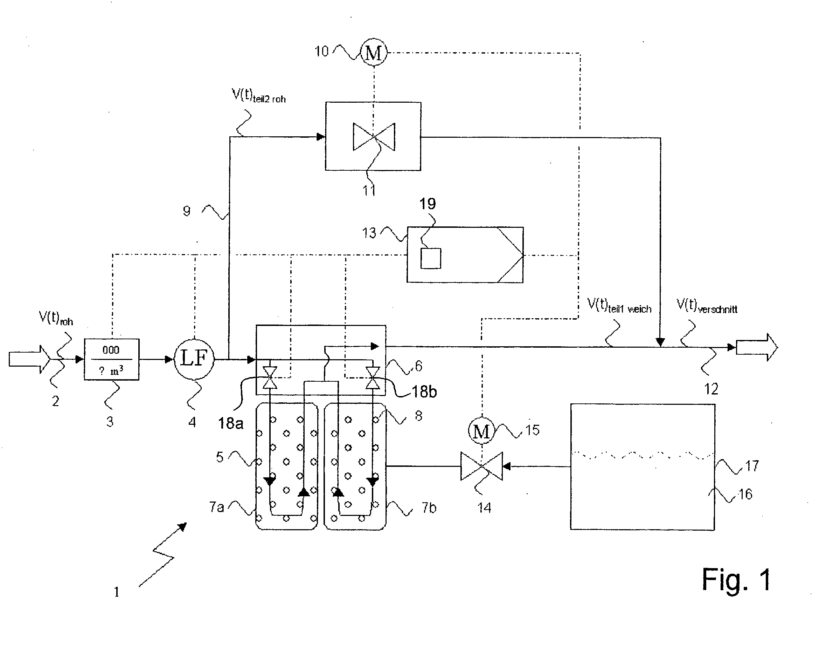

Die **Fig. 1** zeigt einen schematischen Aufbau einer erfindungsgemäßen Wasserenthärtungsanlage umfassend zwei Behälter mit lonentauscherharz im Parallelbetrieb (Normalbetrieb).

Die Wasserenthärtungsanlage 1 ist über einen Zulauf 2 an ein lokales Wasserversorgungssystem, etwa das Trinkwassernetz, angeschlossen. Der am Zulauf 2 fließende (gesamte) Rohwasserstrom V(t)ᵣₒₕ passiert zunächst einen Durchflussmesser 3 und anschließend einen Leitfähigkeitssensor 4, mit dem die momentane Wasserhärte WHᵣₒₕ mom des Rohwassers bestimmt wird.

Ein erster Teil (Teilstrom V(t)_{teil1weich}) des (gesamten) Rohwasserstroms V(t)ᵣₒₕ fließt einer Enthärtungsvorrichtung 5 zu, welche insbesondere einen Steuerkopf 6 sowie zwei (hier gleichartige) Behälter (Tanks) 7a, 7b mit lonentauscherharz 8 aufweist. Ein zweiter Teil (Teilstrom V(t)ₜₑᵢₗ₂ᵣₒₕ) fließt in eine Bypassleitung 9 ein.

Das in die Enthärtungsvorrichtung 5 einfließende Rohwasser durchströmt parallel die beiden Behälter 7a, 7b mit Ionentauscherharz 8, wobei dieses vollständig enthärtet wird. Durch die parallele Durchströmung der Behälter 7a, 7b vergrößert sich der Nenndurchfluss der Anlage 1 verglichen mit einer Durchströmung nur eines einzigen Behälters.

Der zweite Teil des Rohwassers V(t)ₜₑᵢₗ₂ᵣₒₕ in der Bypassleitung 9 passiert eine automatisch betätigbare Verschneideeinrichtung, hier ausgebildet mit einem mittels eines Stellmotors 10 verstellbaren Verschneideventil 11.

Der erste Teilstrom V(t)_{teil1weich} und der zweite Teilstrom V(t)ₜₑᵢₗ₂ᵣₒₕ werden schließlich zu einem Verschnittwasserstrom V(t)_{verschnitt} vereint, welcher einem Ablauf 12 zufließt. Der Ablauf 12 ist an eine nachfolgende Wasserinstallation, etwa die Frischwasserleitungen eines Gebäudes, angeschlossen.

Die Messergebnisse des Leitfähigkeitssensors 4 und des Durchflussmessers 3 werden an eine elektronische Steuereinrichtung 13 übertragen. In der Steuereinrichtung 13 ist ein gewünschter Sollwert (SW) der Wasserhärte des Verschnittwassers hinterlegt. Aus dem Sollwert (SW) der Verschnittwasserhärte und der momentanen Wasserhärte WHᵣₒₙ^{mom} , welche aus der Leitfähigkeit gemessen am Sensor 4 bestimmt wird, ermittelt die Steuereinrichtung 13 ein momentanes Soll-Verhältnis der Teilströme V(t)_{teil1weich} und V(t)_{teil2roh,} durch welches sich die gewünschte Wasserhärte im Verschnittwasser ergibt. Die Anteile der beiden Teilströme V(t)_{teil1weich} und V(t)ₜₑᵢₗ₂ᵣₒₕ werden über die Einstellung der Verschneideeinrichtung festgelegt. Hierzu sind die sich bei verschiedenen Einstellungen der Verschneideeinrichtung ergebenden Anteile der Teilströme in der elektronischen Steuereinrichtung 13 hinterlegt.

Die elektronische Steuereinrichtung 13 überwacht auch den Erschöpfungszustand des lonentauscherharzes 8 in den beiden Behältern 7a, 7b. Bei Wasserentnahmen wird dabei die entnommene Wassermenge jeweils mit der zugehörigen momentanen Rohwasserhärte gewichtet und von der aktuellen Restkapazität abgezogen.

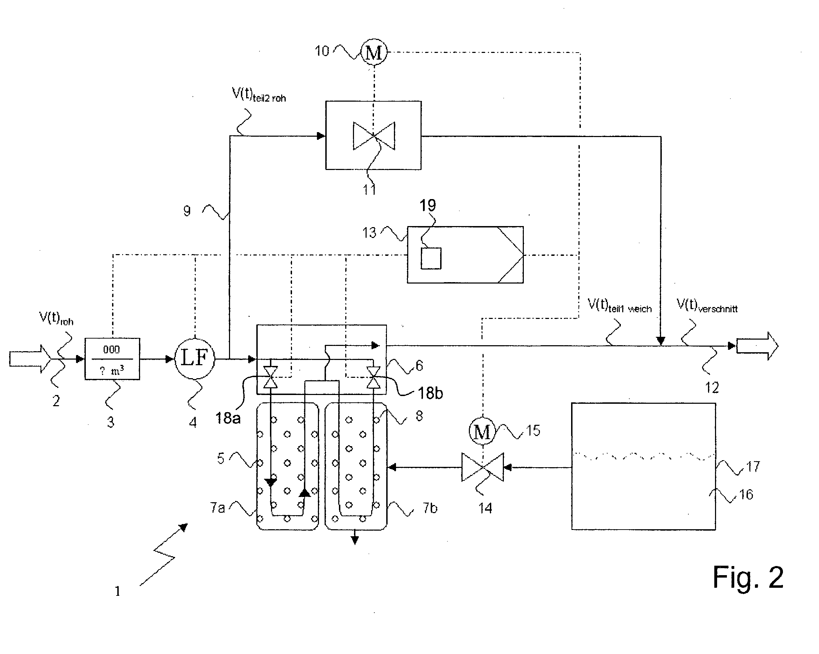

Ist ein Behälter erschöpft (in **Fig. 2** der Tank 7b), so nimmt die elektronische Steuereinrichtung 13 den erschöpften Behälter 7b vom Netz (hierbei wird ein Einlassventil 18b geschlossen) und unterzieht den erschöpften Behälter 7b einer Regeneration. Hierfür wird ein Regenerationsventil 14 mit einem Stellmotor 15 durch die elektronische Steuereinrichtung 13 automatisch betätigt, wodurch Regeneriermittellösung (bevorzugt Salzsole) 16 aus einem Vorratsgefäß 17 durch den erschöpften Behälter 7b strömt.

Während der Regeneration des Behälters 7b befindet sich ausschließlich Behälter 7a in Betriebsstellung (hierbei ist das Einlassventil 18a geöffnet) und liefert Weichwasser. Entsprechendes gilt umgekehrt, wenn Behälter 7a erschöpft ist und regeneriert wird. In diesem Fall liefert ausschließlich Behälter 7b Weichwasser. Dadurch, dass die beiden Behälter 7a, 7b nacheinander vom Netz genommen und regeneriert werden ("Pendelbetrieb"), ist eine ununterbrochene Versorgung mit Weichwasser garantiert.

Der Fluss des gesamten Wasserstromes durch nur einen Behälter (in Fig. 2 Behälter 7a) in der Enthärtungsvorrichtung 5 im Regenerationsbetrieb bedingt, dass der Druckverlust in der Wasserenthärtungsanlage 1 im Vergleich zum Parallelbetrieb zunimmt und folglich der Teilstrom V(t)_{teil1weich} abnimmt. Dadurch verschieben sich die Anteile der beiden Teilströme am Verschnittwasser zugunsten des Teilstromes V(t)ₜₑᵢₗ₂ᵣₒₕ. Dies bedeutet, dass die Härte im Verschnittwasser ansteigt und somit vom Sollwert (SW) abweicht.

Als erfindungsgemäße Besonderheit weist die Steuereinrichtung 13 einen Speicher 19 für eine Korrekturfunktion (umfassend beispielsweise eine oder mehrere Korrekturfaktoren bzw. Korrekturkennlinien) auf, mit der eine Nachregelung (Korrektur) der Verstellposition der Verschneideeinrichtung während einer Regeneration erfolgt.

Während der Regeneration nimmt (bei sonst unveränderten Bedingungen) der Teilstrom V(t)_{teil1weich} im Vergleich zum Normalbetrieb ab. Um das Verhältnis der beiden Teilströme V(t)_{teil1weich} und V(t)ₜₑᵢₗ₂ᵣₒₕ und damit die Verschnittwasserhärte konstant zu halten, wird die Verstellposition der Verschneideeinrichtung mittels der abgespeicherten Korrekturfunktion nachgeregelt und der Teilstrom V(t)ₜₑᵢₗ₂ᵣₒₕ entsprechend reduziert. Die Korrekturfunktion ist abhängig von den Strömungsverhältnissen in der Wasserenthärtungsanlage 1 und wird vorab für jeden Anlagentyp experimentell bestimmt. Die Korrektur der Verstellposition der Verschneideeinrichtung kann in meist ausreichender Genauigkeit mit einer konstanten Korrektur erfolgen. Für eine besonders genaue Nachregelung der Verstellposition der Verschneideeinrichtung während der Regeneration eines Behälters (in Fig. 2 der Tank 7b) kann eine Korrekturfunktion herangezogen werden, die vom Teilstrom V(t)_{teil1weich} und/oder vom Sollwert (SW) abhängig ist. Auch diese Korrekturfunktion wird vorab experimentell bestimmt und im Speicher 19 der elektronischen Steuereinrichtung 13 hinterlegt.

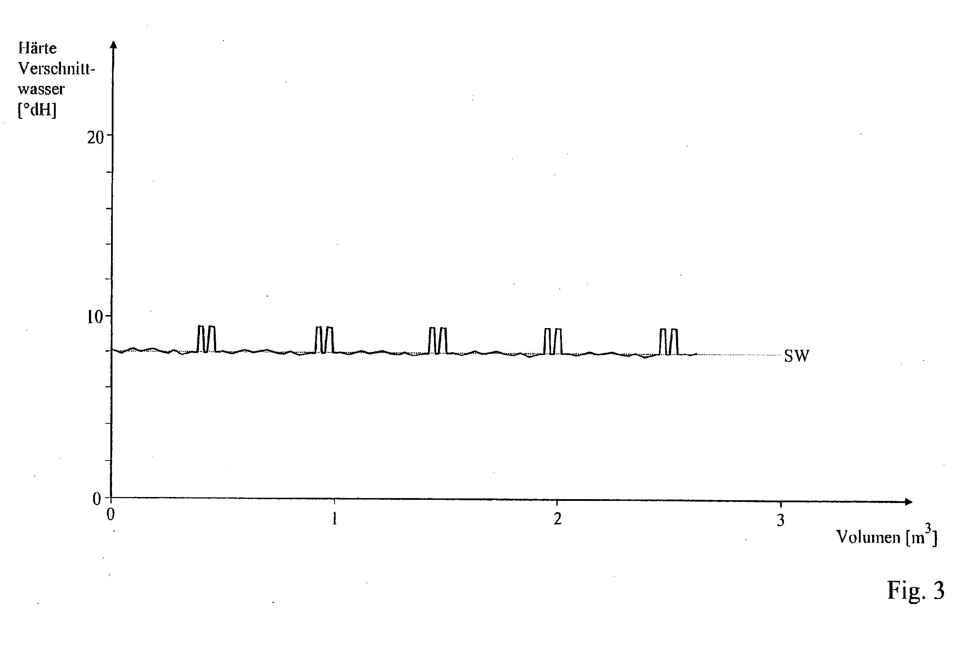

**Fig. 3** zeigt eine Diagramm-Darstellung der Härte im Verschnittwasser in Abhängigkeit vom durch eine Wasserenthärtungsanlage entsprechend Fig. 1 geflossenen Wasservolumen ohne Korrektur der Verschneidung. Während jeder Regenerationsphase steigt die Härte im Verschnittwasser vom Sollwert (SW), hier 8°dH, auf ca. 9,5°dH an. Der Anstieg erfolgt, sobald ein Behälter vom Netz geht. Die Verschnittwasserhärte fällt auf den Sollwert (SW) zurück, wenn der frisch regenerierte Behälter wieder ans Netz geht. Wird kurz darauf der zweite Behälter regeneriert, so steigt die Härte im Verschnittwasser erneut an. Sobald beide frisch regenerierten Behälter in Betriebsstellung sind, erreicht die Verschnittwasserhärte wieder den Sollwert (SW).

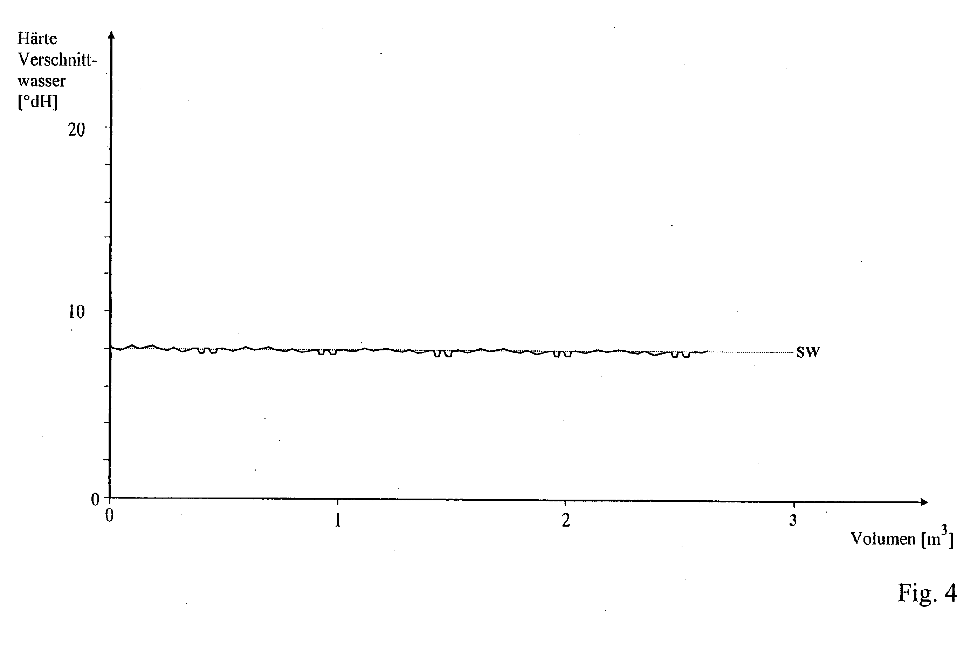

**Fig. 4** zeigt eine Diagramm-Darstellung der Härte im Verschnittwasser in Abhängigkeit vom durch die Wasserenthärtungsanlage entsprechend Fig. 1 geflossenen Wasservolumen mit erfindungsgemäßer Korrektur der Verschneidung. Die Verschnittwasserhärte bleibt auch in Regenerationsphasen nahe am Sollwert (SW), weil durch die Korrektur der Verstellposition der Verschneideeinrichtung während der Regeneration dem Teilstrom V(t)_{teil1weich} entsprechend weniger Rohwasser zugemischt wird und dadurch das Verhältnis V(t)_{teil1weich} zu V(t)ₜₑᵢₗ₂ᵣₒₕ annähernd konstant bleibt.

## Patentansprüche

1. Verfahren zum Betrieb einer Wasserenthärtungsanlage (1), wobei die Wasserenthärtungsanlage (1) umfasst
- eine Enthärtungsvorrichtung (5),
- einen Sensor (4) zur Messung einer Rohwasserhärte oder ein Mittel zur Eingabe einer Rohwasserhärte,
- eine automatisch verstellbare Verschneideeinrichtung zum Mischen eines Verschnittwasserstroms V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
- und eine elektronische Steuereinrichtung (13) zur Steuerung der Verstellposition der Verschneideeinrichtung, so dass die Wasserhärte im Verschnittwasserstrom V(t)_{verschnitt} auf einen vorgegebenen Sollwert (SW) eingestellt wird,
wobei für die Steuerung der Verstellposition die gemessene oder eingegebene Rohwasserhärte ausgewertet wird und eine in der Steuereinrichtung (13) hinterlegte, für die Wasserenthärtungsanlage (1) spezifische Abhängigkeit der Verhältnisse der Teilströme V(t)_{teil1weich} und V(t)ₜₑᵢₗ₂ᵣₒₕ von der Verstellposition der Verschneideeinrichtung unterstellt wird,
**dadurch gekennzeichnet,**
**dass** die Enthärtungsvorrichtung (5) mehrere Behälter (7a, 7b) mit lonentauscherharz (8) umfasst,
und **dass** die spezifische Abhängigkeit der Verhältnisse der Teilströme V(t)_{teil1weich} und V(t)ₜₑᵢₗ₂ᵣₒₕ von der Verstellposition der Verschneideeinrichtung mit einer in der Steuereinrichtung (13) hinterlegten Korrekturfunktion abgeändert wird, wenn ein Teil der Behälter (7a, 7b) einer Regeneration unterzogen wird.

2. Verfahren nach Anspruch 1, **dadurch gekennzeichnet, dass** die hinterlegte Korrekturfunktion abhängig ist von der Anzahl der Behälter (7a, 7b) mit Ionentauscherharz (8), die gerade einer Regeneration unterzogen werden.

3. Verfahren nach einem der vorhergehenden Ansprüche, **dadurch gekennzeichnet, dass** die hinterlegte Korrekturfunktion abhängig ist von der Geometrie oder geometrischen Anordnung der Behälter (7a, 7b) mit lonentauscherharz (8), die gerade einer Regeneration unterzogen werden.

4. Verfahren nach einem der vorhergehenden Ansprüche, **dadurch gekennzeichnet, dass** die hinterlegte Korrekturfunktion abhängig ist vom ersten Teilstrom V(t)_{teil1weich} oder vom der Wasserenthärtungsanlage (1) zufließenden, gesamten Rohwasserstrom V(t)ᵣₒₕ.

5. Verfahren nach einem der vorhergehenden Ansprüche, **dadurch gekennzeichnet, dass** die Korrekturfunktion abhängig ist von einem in der Wasserenthärtungsanlage (1) bestimmten Druckverlust, insbesondere in einem Weichwasser oder Verschnittwasser führenden Bereich.

6. Verfahren nach einem der vorhergehenden Ansprüche, **dadurch gekennzeichnet, dass** die Korrekturfunktion abhängig ist vom Sollwert (SW) der Wasserhärte.

7. Verfahren nach Anspruch 1, **dadurch gekennzeichnet, dass** die hinterlegte Korrekturfunktion eine Konstante ist.

8. Wasserenthärtungsanlage (1),
wobei die Wasserenthärtungsanlage (1) umfasst
- eine Enthärtungsvorrichtung (5),
- einen Sensor (4) zur Messung einer Rohwasserhärte oder ein Mittel zur Eingabe einer Rohwasserhärte,
- eine automatisch verstellbare Verschneideeinrichtung zum Mischen eines Verschnittwasserstroms V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
- und eine elektronische Steuereinrichtung (13) zur Steuerung der Verstellposition der Verschneideeinrichtung, so dass die Wasserhärte im Verschnittwasserstrom V(t)_{verschnitt} auf einen vorgegebenen Sollwert (SW) eingestellt wird,
wobei die Steuereinrichtung (13) dazu ausgebildet ist, für die Steuerung der Verstellposition die gemessene oder eingegebene Rohwasserhärte auszuwerten und eine in der Steuereinrichtung (13) hinterlegte, für die Wasserenthärtungsanlage (1) spezifische Abhängigkeit der Verhältnisse der Teilströme V(t)_{teil1weich} und V(t)ₜₑᵢₗ₂ᵣₒₕ von der Verstellposition der Verschneideeinrichtung zu unterstellen,
**dadurch gekennzeichnet,**
**dass** die Enthärtungsvorrichtung (5) mehrere Behälter (7a, 7b) mit lonentauscherharz (8) umfasst,
und **dass** die Steuereinrichtung (13) dazu ausgebildet ist, die spezifische Abhängigkeit der Verhältnisse der Teilströme V(t)_{teil1weich} und V(t)ₜₑᵢₗ₂ᵣₒₕ von der Verstellposition der Verschneideeinrichtung mit einer in der Steuereinrichtung (13) hinterlegten Korrekturfunktion abzuändern, wenn ein Teil der Behälter (7a, 7b) einer Regeneration unterzogen wird.

9. Wasserenthärtungsanlage (1) nach Anspruch 8, **dadurch gekennzeichnet, dass** wenigstens ein Wasserzähler (3) zur direkten oder indirekten Bestimmung des ersten Teilstroms V(t)_{teil1weich} oder des der Wasserenthärtungsanlage (1) zufließenden, gesamten Rohwasserstroms V(t)ᵣₒₕ vorgesehen ist.

10. Wasserenthärtungsanlage (1) nach Anspruch 8 oder 9, **dadurch gekennzeichnet, dass** ein oder mehrere Drucksensoren vorgesehen sind, insbesondere in einem Weichwasser oder Verschnittwasser führenden Bereich.

## Claims

1. Method of operating a water softening system (1), the water softening system (1) comprising
- a softening device (5),
- a sensor (4) for measuring an untreated water hardness or a means for entering an untreated water hardness,
- an automatically adjustable blending device for mixing a blended water flow V(t)_{blended} from a first softened partial flow V(t)_{part1soft} and a second partial flow V(t)_{part2untreated} which carries untreated water,
- and an electronic control device (13) for controlling the adjustment position of the blending device in such a manner that the water hardness of the blended water flow V(t)_{blended} is adjusted to a predetermined desired value (SW),
wherein for controlling the adjustment position, the measured or entered untreated water hardness is evaluated and a dependency of the ratios of the partial flows V(t)_{part1soft} and V(t)_{part2untreated} on the adjustment position of the blending device is presumed, which dependency is specific to the water softening system (1) and is stored in the control device (13), **characterized in that**
the softening device (5) comprises several containers (7a, 7b) containing ion exchange resin (8),
and the specific dependency of the ratios of the partial flows V(t)_{part1soft} and V(t)_{part2untreated} on the adjustment position of the blending device is changed by means of a correction function stored in the control device (13) when part of the containers (7a, 7b) is subjected to regeneration.

2. Method according to claim 1, **characterized in that** the stored correction function depends on the number of containers (7a, 7b) containing ion exchange resin (8) that are currently being subjected to regeneration.

3. Method according to any one of the preceding claims, **characterized in that** the stored correction function depends on the geometry or geometrical arrangement of the containers (7a, 7b) containing ion exchange resin (8) that are currently being subjected to regeneration.

4. Method according to any one of the preceding claims, **characterized in that** the stored correction function depends on the first partial flow V(t)p_{art1soft} or on the overall untreated water flow V(t)_{untreated} flowing to the water softening system (1).

5. Method according to any one of the preceding claims, **characterized in that** the correction function depends on a pressure loss determined in the water softening system (1), in particular, in an area carrying soft water or blended water.

6. Method according to any one of the preceding claims, **characterized in that** the correction function depends on the desired value (SW) of the water hardness.

7. Method according to claim 1, **characterized in that** the stored correction function is a constant.

8. Water softening system (1),
the water softening system (1) comprising
- a softening device (5),
- a sensor (4) for measuring an untreated water hardness or a means for entering an untreated water hardness,
- an automatically adjustable blending device for mixing a blended water flow V(t)_{blended} from a first softened partial flow V(t)_{part1soft} and a second partial flow V(t)_{part2untreated} which carries untreated water,
- and an electronic control device (13) for controlling the adjustment position of the blending device in such a manner that the water hardness of the blended water flow V(t)_{blended} is adjusted to a predetermined desired value (SW),
wherein the control device (13) is designed to evaluate the measured or entered untreated water hardness and to presume a dependency of the ratios of the partial flows V(t)_{par1soft} and V(t)_{part2untreated} on the adjustment position of the blending device, which dependency is specific to the water softening system (1) and is stored in the control device (13), for controlling the adjustment position,
**characterized in that**
the softening device (5) comprises several containers (7a, 7b) containing ion exchange resin (8),
and the control device (13) is designed to change the specific dependency of the ratios of the partial flows V(t)_{part1soft} and V(t)_{part2untreated} on the adjustment position of the blending device by means of a correction function stored in the control device (13) when part of the containers (7a, 7b) is subjected to regeneration.

9. Water softening system (1) according to claim 8, **characterized in that** at least one water meter (3) is provided for direct or indirect determination of the first partial flow V(t)_{part1soft} or of the overall untreated water flow V(t)_{untreated} that flows to the water softening system (1).

10. Water softening system (1) according to claim 8 or 9, **characterized in that** one or more pressure sensors are provided, in particular in an area carrying soft water or blended water.

## Revendications

1. Procédé pour faire fonctionner une installation d'adoucissement d'eau (1), sachant que l'installation d'adoucissement d'eau (1) comprend
- un dispositif adoucisseur (5),
- un capteur (4) pour mesurer une dureté d'eau brute ou un moyen pour saisir une dureté d'eau brute,
- un dispositif de coupage à réglage automatique pour obtenir un flux d'eau coupée V(t)_{verschnitt} en mélangeant un premier flux partiel adouci V(t)teillweich et un deuxième flux partiel d'eau brute V(t)ₜₑᵢₗ₂ᵣₒₕ,
- et un dispositif de commande électronique (13) pour commander la position de réglage du dispositif de coupage de façon que la dureté de l'eau dans le flux d'eau coupée V(t)_{verschnitt} soit réglée à une valeur de consigne prédéfinie (SW),
sachant que, pour commander la position de réglage, on analyse la dureté d'eau brute mesurée ou saisie et on présume une dépendance, enregistrée dans le dispositif de commande (13) et spécifique de l'installation d'adoucissement d'eau (1), des rapports des flux partiels V(t)_{teil1weich} et V(t)ₜₑᵢₗ₂ᵣₒₕ vis-à-vis de la position de réglage du dispositif de coupage,
**caractérisé en ce que** le dispositif adoucisseur (5) comprend plusieurs réservoirs (7a, 7b) contenant de la résine échangeuse d'ions (8),
et **en ce que** la dépendance spécifique des rapports des flux partiels V(t)_{teil1weich} et V(t)ₜₑᵢₗ₂ᵣₒₕ vis-à-vis de la position de réglage du dispositif de coupage est modifiée par une fonction de correction enregistrée dans le dispositif de commande (13) lorsqu'une partie des réservoirs (7a, 7b) est soumise à une régénération.

2. Procédé selon la revendication 1, **caractérisé en ce que** la fonction de correction enregistrée est dépendante du nombre de réservoirs (7a, 7b) contenant de la résine échangeuse d'ions (8) qui sont justement soumis à une régénération.

3. Procédé selon l'une des revendications précédentes, **caractérisé en ce que** la fonction de correction enregistrée est dépendante de la géométrie ou de la disposition géométrique des réservoirs (7a, 7b) contenant de la résine échangeuse d'ions (8) qui sont justement soumis à une régénération.

4. Procédé selon l'une des revendications précédentes, **caractérisé en ce que** la fonction de correction enregistrée est dépendante du premier flux partiel V(t)_{teil1weich} ou du flux total d'eau brute V(t)ᵣₒₕ arrivant à l'installation d'adoucissement d'eau (1).

5. Procédé selon l'une des revendications précédentes, **caractérisé en ce que** la fonction de correction est dépendante d'une perte de pression donnée dans l'installation d'adoucissement d'eau (1), en particulier dans une région conduisant de l'eau douce ou de l'eau coupée.

6. Procédé selon l'une des revendications précédentes, **caractérisé en ce que** la fonction de correction est dépendante de la valeur de consigne (SW) de la dureté de l'eau.

7. Procédé selon la revendication 1, **caractérisé en ce que** la fonction de correction enregistrée est une constante.

8. Installation d'adoucissement d'eau (1),
sachant que l'installation d'adoucissement d'eau (1) comprend
- un dispositif adoucisseur (5),
- un capteur (4) pour mesurer une dureté d'eau brute ou un moyen pour saisir une dureté d'eau brute,
- un dispositif de coupage à réglage automatique pour obtenir un flux d'eau coupée V(t)_{verschnitt} en mélangeant un premier flux partiel adouci V(t)_{teil1weich} et un deuxième flux partiel d'eau brute V(t)ₜₑᵢ₁₂ᵣₒₕ,
- et un dispositif de commande électronique (13) pour commander la position de réglage du dispositif de coupage de façon que la dureté de l'eau dans le flux d'eau coupée V(t)_{verschnitt} soit réglée à une valeur de consigne prédéfinie (SW),
sachant que le dispositif de commande (13) est conçu pour, afin de commander la position de réglage, analyser la dureté d'eau brute mesurée ou saisie et présumer une dépendance, enregistrée dans le dispositif de commande (13) et spécifique de l'installation d'adoucissement d'eau (1), des rapports des flux partiels V(t)_{teil1weich} et V(t)ₜₑᵢₗ₂ᵣₒₕ vis-à-vis de la position de réglage du dispositif de coupage,
**caractérisée en ce que** le dispositif adoucisseur (5) comprend plusieurs réservoirs (7a, 7b) contenant de la résine échangeuse d'ions (8),
et **en ce que** le dispositif de commande (13) est conçu pour modifier la dépendance spécifique des rapports des flux partiels V(t)_{teil1weich} et V(t)ₜₑᵢₗ₂ᵣₒₕ vis-à-vis de la position de réglage du dispositif de coupage par une fonction de correction enregistrée dans le dispositif de commande (13) lorsqu'une partie des réservoirs (7a, 7b) est soumise à une régénération.

9. Installation d'adoucissement d'eau (1) selon la revendication 8, **caractérisée en ce qu'**il est prévu au moins un compteur d'eau (3) pour déterminer directement ou indirectement le premier flux partiel V(t)_{teil1weich} ou le flux total d'eau brute V(t)ᵣₒₕ arrivant à l'installation d'adoucissement d'eau (1).

10. Installation d'adoucissement d'eau (1) selon la revendication 8 ou 9, **caractérisée en ce qu'**il est prévu un ou plusieurs capteurs de pression, en particulier dans une région conduisant de l'eau douce ou de l'eau coupée.
